# EUROPEAN PATENT APPLICATION

(11) **EP 4 531 247 A1**
(43) Date of publication of application: **02.04.2025**
(21) Application number: 24203315.7
(22) Date of filing: 27.09.2024
(51) Int. Cl.: H02K 5/10, F16J 15/14, H02K 5/22, H02K 11/33, H05K 5/06, H05K 7/14, H02K 7/14

(54) **ELECTRIC MACHINE**

(30) Priority: 29.09.2023 IN 202341065798
(71) Applicant: Valeo Japan Co., Ltd, Kumagaya-shi, Saitama 360-0193 (JP)
(72) Inventor: BANOTH, Ravinder, 600130 Chennai (IN); BANUMURTHY, Hariharan, 600130 Chennai (IN); RIBOT, Herve, 78322 Le Mesnil-Saint-Denis Cedex (FR); DURAIPANDI, Arumugapandian, 600130 Chennai (IN); HAVET, Peggy, 78322 Le Mesnil-Saint-Denis Cedex (FR); GINOUX, Geoffroy, 95892 CERGY PONTOISE (FR)
(74) Representative: Valeo Systèmes Thermiques

(57) **Abstract**

An electric machine (100) includes a machine (110), an electric motor (120) and an inverter (130). The inverter (130) is received and held in an inverter housing (135). The inverter housing (135) comprises a front head (140) and a cover (150). The front head (140) is having a bottom wall (141) and a peripheral wall (142). The peripheral wall (142) includes a front end (144) and a shoulder portion (145). The cover (150) includes an abutment portion (152) and a rim portion (153). The cover (150) provided on the front end (144) to cover an opening (143) of the front head (140). The abutment portion (152) abuts on the front end (144). Further, a sealing (160) is provided between the front end (144) and the abutment portion (152). The sealing (160) adheres with one of the front end (144) and the abutment portion (152) while not with the other.

## Description

### FIELD OF INVENTION

The present invention relates to an electric machine. More particularly, the present invention relates to a sealing arrangement for forming re-usable and secure sealing between components of the electric machine.

### BACKGROUND

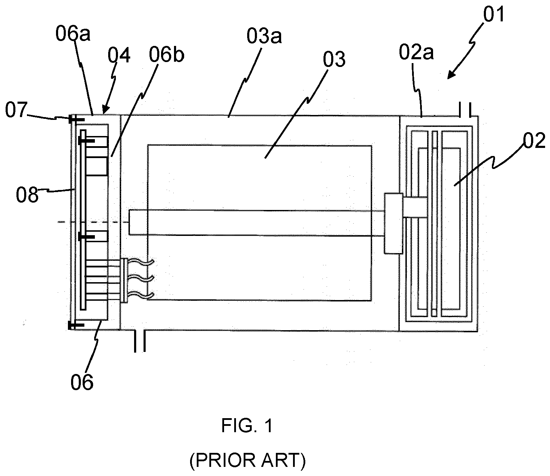

FIG. 1 illustrates a schematic representation of a conventional electric machine 01, for example, an electric driven compressor including a compressor unit 02, an electric motor 03 driving the compressor unit 02, and an inverter 06 which regulates and supplies electrical power to the electric motor 03. The compressor unit 02 is generally a scroll type compressor received within a compressor housing 02a. The electric motor 03 is received in a motor housing 03a. The inverter includes a printed circuit board and electronic components mounted on the printed circuit board. The inverter is received and held inside the inverter housing 04. The inverter housing 04 includes a front head 06 having a bottom wall 06b and a peripheral wall 06a extending from an outer end of the bottom wall 06b. The opening end of the front head 04 is covered by a cover 08 by securing the cover on an end of peripheral wall 06a by screws or mounting bolts 07 to define an enclosure that receives the inverter 06. Further, a sealing 05 is provided between the end of the peripheral wall 06a and the cover 08 to protect the inverter against external environment conditions.

Generally, a gasket sheet or O ring is used as the sealing 05 between the peripheral wall 06a and the cover 08. A gasket sheet is composed of a core layer made of metal sheet and elastic layers coated on the both sides of the core layer. By sandwiching a gasket or O ring between the peripheral wall 06a and the cover 08, the elastic layer of the gasket or O ring is elastically deformed so as to fit the surfaces of the end of the peripheral wall 06a and the cover 08, thereby ensuring the seal between them. However, the gasket or O ring is a part independent from an inverter housing 04 or cover 08, so a certain process control is needed to prevent misplacement, mis-assembly or dislocation. Should mis-assembly or dislocation of the gasket occur, water or unfavourable fluid may penetrate inside the inverter housing 04 and damage the electronic components received in the enclosure, thereby defeating the purpose of disposing the sealing element between the cover and the front head.

As another configuration to ensure the seal between the cover 08 and front head 06, use of glue between the cover 08 and the peripheral wall 06a of the front head 06 is suggested. The glue adheres with the cover 08 on one side and the peripheral wall 06a of the front head 06 on the other side. The glue forms a sealing 05 between the cover 08 and the peripheral wall 06a after being cured, thereby preventing penetration of unfavourable fluid inside the inverter housing. However, the glue configures a permanent joint between the cover 08 and the peripheral wall 06a causing serviceability issues. Particularly, with the use of the glue between the cover 08 and the peripheral wall 06a, dis-assembly of the cover 08 from the front head 06 and the access to interior of the inverter housing 04 is difficult. Further, even if the cover 08 can be disassembled from the front head 06, part of the glue remains on the cover and the front head. Such a remaining glue is hard to remove from the adhered surfaces. More specifically, the use of glue renders the same not reusable as the repeated use thereof is not possible.

Accordingly, there is a need for an electric machine configured with a sealing arrangement that addresses the problems of misplacement, mis-assembly or dislocation of the sealing element faced by conventional sealing arrangements. Further, there is a need for an electric machine configured with a sealing arrangement for configuring secure sealing between a cover and a peripheral wall of a front head of an inverter housing, while still rendering conveniently separable assembly between the cover and the peripheral wall, thereby addressing serviceability issues faced in conventional sealing arrangements.

### SUMMARY

An electric machine (is disclosed in accordance with an embodiment of the present invention. The electric machine includes a machine, an electric motor and an inverter. The electric motor is driving the machine. The inverter is received and held in an inverter housing and adapted to process and regulate electrical power from an external power source before being supplied to the electric motor. The inverter housing comprising a front head and a cover. The front head is having a bottom wall and a peripheral wall extending from an outer end of the bottom wall toward axial direction. The cover is provided on a front end of the front head (to cover an opening of the front head, wherein an abutment portion of the cover abuts on the front end of the peripheral wall of the front head. A sealing is provided between the front end of the peripheral portion and the abutment portion of the cover, wherein the sealing adheres with one of the front end and the abutment portion while not with the other.

Generally, one of the abutment portion of the cover and the front end of the peripheral wall is formed with a groove to receive and retain the sealing to be cured therein before assembly of the cover to the front head.

Particularly, the sealing extends beyond an abutting surface of the corresponding cover or the front end of the front head upon being cured and is compressed between the cover and the front head when the cover is assembled on the front head.

Generally, vertical dimension "h" of the sealing is greater than depth 'd" of the groove.

Further, the cross sectional area of the groove is greater than the cross-sectional area of the sealing.

Particularly, the cover comprises a rim portion extending from an outer end of the abutment portion toward an axial direction of the front head.

More specifically, the abutment portion of the cover overhangs the front end the peripheral wall, and the rim portion extends along an outer periphery of the peripheral wall.

Specifically, a shoulder portion is formed on the outer periphery of the peripheral wall, the rim portion extends along an outer periphery of the shoulder portion with a gap there-between.

Further, the inverter housing comprises a supplemental sealing disposed between the rim portion of the cover and the shoulder portion of the front head.

Generally, the cover is formed by a stamping process from a metallic plate.

### BRIEF DESCRIPTION OF THE DRAWINGS

Other characteristics, details and advantages of the invention may be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates a schematic representation of an assembly of a conventional electric machine.
FIG. 2 illustrates a schematic representation of an assembly of an electric machine in accordance with an embodiment of the present invention.
FIG. 3 illustrates an isometric view of an inverter housing in an assembled configuration in accordance with an embodiment of the present invention.
FIG. 4 illustrates a sectional view of the inverter housing of FIG. 3 along a plane passing through the mounting bolts and depicting the seal forming sealing connection between the cover and the front head.
FIG. 5 illustrates an enlarged sectional view of the sealing connection of FIG. 6.
FIG. 6a - FIG. 6c illustrate various steps involved in deploying and curing of a sealing on a cover of the inverter housing of FIG. 3.
FIG.7a illustrates schematic representation depicting the seal received and cured inside a groove formed on the cover.
FIG. 7b Illustrates the seal in compressed configuration compressed between a peripheral wall of the front head and a abutment portion of the cover.

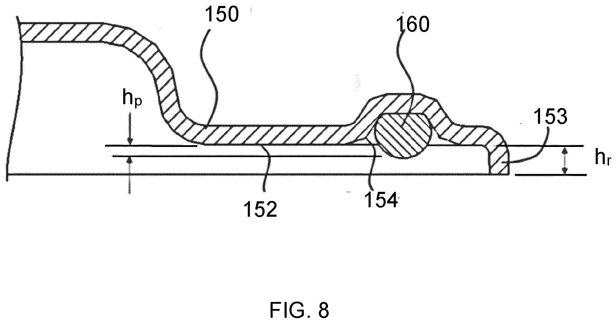

FIG. 8 illustrates an enlarged view depicting the arrangement of sealing with respect to the rim portion.
FIG. 9 illustrates an enlarged sectional view of the inverter housing in accordance with another embodiment of the present invention depicting the seal and a supplemental sealing configuring sealing connection between the cover and the front head.

### DETAILED DESCRIPTION OF THE INVENTION

It must be noted that the accompanying figures disclose the invention in a detailed enough way to be implemented, said figures helping to better define the invention if needs be. The invention should however not be limited to the embodiment disclosed in the description.

The present invention is explained with an example of an inverter of an electric driven compressor. The inverter includes an inverter housing and electronic components such as a printed circuit board and power transistors received inside the inverter housing. The inverter housing includes a cover and a front head. The front head is having a bottom wall and a peripheral wall extending from an outer end of the bottom wall toward an axial direction. The peripheral wall of the front head includes a front end and a shoulder. The cover includes an abutment portion and a rim portion. The cover is provided on the front end of the front head to cover an opening of the front head, wherein the abutment portion of the cover abuts on the front end of the peripheral wall of the front head. The cover is required to removable with respect to the front head to provide access to an interior of an enclosure defined by assembling the cover to the front head. The rim portion of the cover is adapted to align and engage with the peripheral wall extending along a periphery of the front head to define the enclosure between the cover and the front head. The inverter housing is configured with a sealing arrangement that provides effective sealing between the cover and the front head when assembled to each other, wherein the sealing arrangement is protected against damage when the cover is removed from the front head, thereby providing serviceability to the inverter and rendering a sealing reusable and. The sealing is provided between the front end of the peripheral portion of the front head and the abutment portion of the cover, wherein the sealing adheres with one of the front end and the abutment portion while not with the other. With such configuration, the cover is separable from the front head even when the sealing is disposed between the front end of the front head and the abutment portion of the cover to perform sealing function between the front head and the cover, thereby addressing the serviceability issues faced in conventional inverter.

Although, the present invention is explained with example of sealing arrangement for sealing the connection between the cover and the front head of an inverter housing of an electric driven compressor for a vehicle, however, the sealing arrangement is also applicable for any housing used in vehicular or non-vehicular environment and configured by assembling two portions, wherein it is required to configure secure sealing between the two portions and still ensuring serviceability and preventing damage to the sealing during dis-assembly of the two portions to render the sealing reusable.

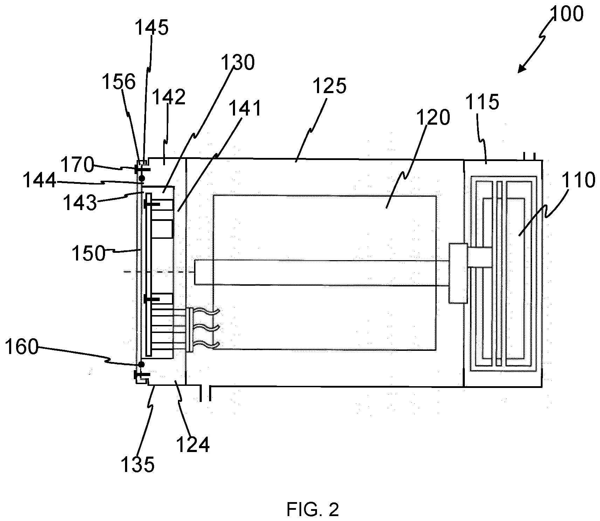

The present invention envisages an electric machine 100, particularly, an electric driven compressor 100. Referring to FIG. 2, a schematic representation of the electric driven compressor 100 is illustrated. The electric driven compressor 100 comprises a machine, for example, a compressor unit 110, an electric motor 120 and an inverter 130.

The compressor unit 110 is received in an enclosure defined by a compressor housing 115. The compressor housing 115 is an open ended housing that includes an end wall and peripheral wall. The compressor unit 110 compresses a fluid, particularly, a refrigerant directed to flow through an air-conditioning loop of a vehicle air-conditioning system. The compressor unit 110 is generally a scroll type compressor. However, the present invention is not limited to any particular configuration of the compressor unit 110. The compressor housing 115 protects the compressor unit 110 against harmful external environment conditions.

The electric motor 120 is received and held in a motor housing 125. The electric motor 120 drives the compressor unit 110. In accordance with an embodiment, the motor housing 125 is also an open ended housing that includes an end wall and peripheral wall disposed along a periphery of the end wall.

The inverter 130 is received and held in an inverter housing 135. The inverter 130 is adapted to process and regulate electrical power from an external power source before being supplied to the electric motor 120. The inverter housing 135 comprises a front head 140 (acting as a heat sink) and a cover 150. The front head 140 and the cover 150 are assembled together to define an enclosure that receives the electronic components such as for example a printed circuit board and the power transistors to safeguard the electronic components from harmful external environment.

The motor housing 125 is open-ended separate housing arranged between the compressor housing 115 and the inverter housing 135. In one arrangement, an open end of the motor housing 125 is abutting the closed end of the inverter housing 135 and the opposite end of the motor housing 125 is abutting the open end of the compressor housing 115 to define separate enclosures for receiving the inverter 130, the electric motor 120 and the compressor unit 110.

Alternatively, the closed ends or end walls of the motor housing 125 and the inverter housing 135 are abutting each other and the open ends of the motor housing 125 and the compressor housing 115 are abutting each other to define a common enclosure for the electric motor 120 and the compressor unit 110.

In accordance with yet another embodiment, the motor housing 125 and the front head 140 of the inverter housing 135 are formed integrally with two open ends opposite to each other and a common wall between the front head 140 and the motor housing 125. The first open end is closed by the open end of the compressor housing 115 to define a common enclosure for the electric motor 120 and the compressor unit 110. The second open end is closed by the cover 150 to define the enclosure for receiving the inverter 130.

However, the present invention is not limited to any particular configuration and arrangement of the compressor housing 115, the motor housing 125 and the inverter housing 135 as far as the compressor housing 115, the motor housing 125 and the inverter housing 135 are capable of enclosing the compressor unit 110, the electric motor 120 and the inverter 130 respectively, to protect these against harmful external environment conditions.

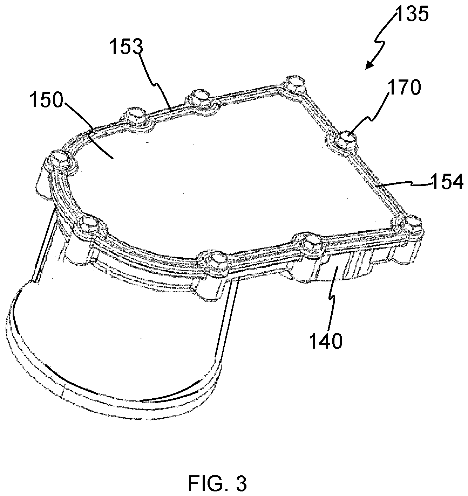

FIG. 3 illustrates an isometric view of the inverter housing 135 and the motor housing 125 in accordance with an embodiment of the present invention. As depicted in FIG. 3, the inverter housing 135 is of larger radial dimension compared to the motor housing 125 at least along one side thereof and at least a portion of the inverter housing 135 extends beyond the motor housing 125. The front head 140 and the cover 150 are of substantially the same contour. The cover 150 is secured on the front head 140 by a plurality of the bolt 170.

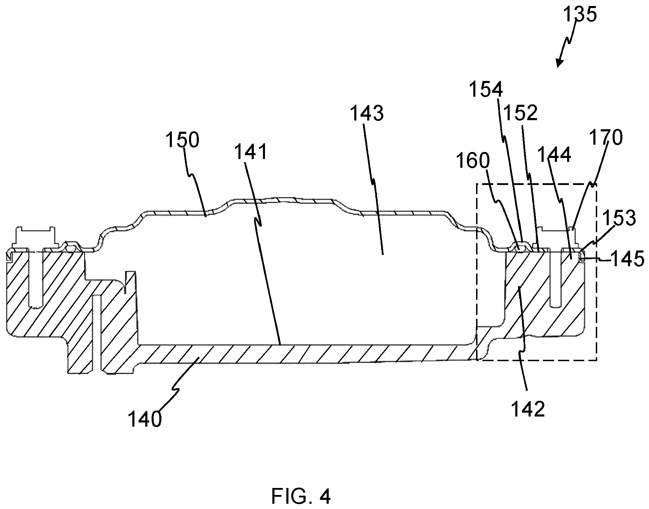

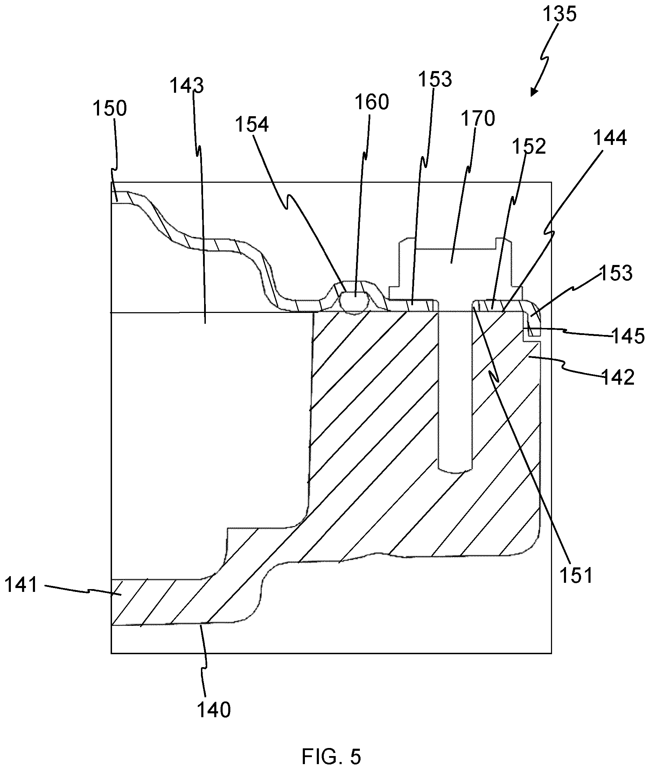

FIG. 4 illustrates a sectional view of the inverter housing 135, wherein the cover 150 is depicted assembled to the front head 140 with a sealing 160 configuring sealing connection between the cover 150 and the front head 140. FIG. 5 illustrates an enlarged sectional view of the sealing connection between the front head 140 and the cover 150.

The front head 140 is an open-ended housing that includes a bottom wall 141 and a peripheral wall 142 extending from an outer end of the bottom wall 141 toward axial direction. The peripheral wall 142 of the front head 140 includes a front end 144 at a side opposite to the bottom wall 141. The front end 144 is parallel to an end of the bottom wall 141 facing to the motor housing 125. Further, a shoulder 145 is formed on the outer periphery of the peripheral wall 142. The front head 140 is made of aluminium casting. At least the end of the bottom wall, the front end 144, and the shoulder 145 are machined from a casted part in order to ensure necessary tolerance and accuracy.

The cover 150 is provided on the front end 144 of the front head 140 to cover an opening 143 of the front head 140. The cover 150 is required to be removable with respect to the front head 140 for accessing the electronic components received within the front head 140 for service and maintenance. The cover 150 includes an abutment portion 152, a rim portion 153, and a groove 154 on the side facing the front head 140. The abutment portion 152 abuts on the front end 144 of the peripheral wall 142. The rim portion 153 extends from an outer end of the abutment portion 152 toward the axial direction of the front head 140. Further, in one embodiment, a groove 154 is formed in the abutment portion 152. In this embodiment, the shape of the cover 150 including the abutment portion 152, the rim portion 153, and groove 154 is formed by a stamping process from a metallic plate.

The sealing 160 is provided between the front end 144 of the peripheral wall 142 and the abutment portion 152 of the cover 150. The sealing 160 adheres with one of the front end 144 and the abutment portion 152 while not with the other. Such configuration of the sealing 160 renders the cover 150 removable with respect to the front head 140 for serviceability of the inverter 130 without getting damaged and hence reusable.

Further, either of the front end 144 and the abutment portion 152 is adapted to receive the sealing 160 for curing thereon before assembling the cover 150 to the front head 140. In one embodiment, the abutment portion 152 is formed with a groove 154 adapted to receive and retain the sealing 160 in place for curing thereof before assembling the cover 150 to the front head 140. The sealing 160 when received, retained and cured in the groove 154 adheres to a surface of the groove 160. In another embodiment not shown, the peripheral wall 142 of the front head 140 is formed with a groove 146 to receive and retain the sealing 160 therein for curing, before assembly of the cover 150 to the front head 140. Since the sealing 160 is cured on the either the front head 140 or the cover 150 and is adhering to either the front head 140 or the cover 150, the misplacement, mis-assembly or dislocation of the sealing 160 is prevented. Further, sealing connection is ensured between the front head 140 and the cover 150 after the assembly of the cover 150 to the front head 140.

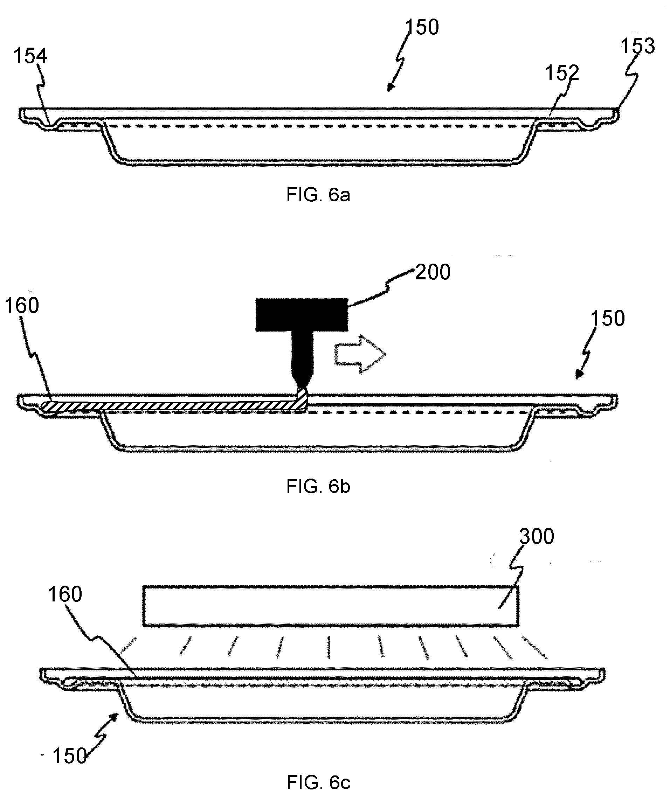

Referring to the FIG. 6a - FIG. 6c, the various steps involved in deploying and curing of the sealing 160 inside the groove 154 formed in the cover 150 are depicted. More specifically, first the cover 150 is placed in upright position with the first groove 154 facing upward as illustrated in FIG. 6a. Thereafter, the sealing 160 in paste form is deployed in the groove 154 by using a sealing dispenser 200 as illustrated in Fig. 6b. Liquid Silicone Rubber can be used as the material for the sealing 160. More specifically, the sealing dispenser 200 moves relative to the cover to deploy the sealing 160 in the groove 154. Thereafter, the sealing 160 received and retained in the groove 154 is cured by subjecting the sealing 160 to Ultra violet radiations by using an ultra violet radiator 300 as illustrated in FIG. 6c. After being cured, the sealing 160 adheres on the surface of the groove 154 and the adhered portion forms a complete seal between the sealing 160 and the groove 154 while the cured sealing 160 has elasticity.

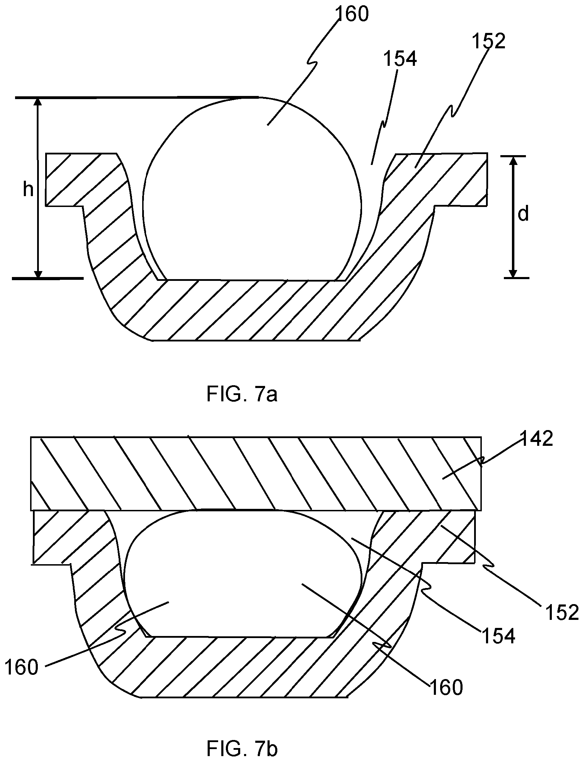

Referring to FIG. 7a, the dimension of the sealing 160, particularly, the height "h" of the cured sealing 160 is more than depth 'd" of the groove 154, 146. Preferably, the ratio of the d/h is in the range of 0.6 to 0.8. In accordance with an embodiment, the ratio of d/h is in the ratio 0.7. The ratio of the d/h is in dependent on the material of the sealing 160. Specifically, the sealing 160 extends beyond an abutting surface of the corresponding cover 150 or the front head 140 upon being cured and is compressed between the cover 150 and the front head 140 when the cover 150 is assembled to the front head 140 as illustrated in FIG. 7b. Irrespective of whether the sealing 160 is cured on the cover 150 or the front head 140, the cross sectional area of the groove 154, 146 is greater than the cross-sectional area of the sealing 160 received and cured therein. Such configuration of the groove 154, 146 allows the groove 154, 146 to accommodate the sealing 160 after the sealing 160 is compressed between the cover 150 and the front head 140 and expands radially outwards when the sealing 160 is compressed between the cover 150 and the front head 140 as the cover 150 is mounted on the front head 140 by means of the mounting bolts 170.

In another embodiment, at least one of the cover 150 and the front head 140 is formed with multiple concentric grooves 154, 146 respectively to receive and retain the corresponding sealing 160 therein for curing before assembly of the cover 150 to the front head 140. The invention is not limited to any particular configuration, number and placement of the sealing 160 and the corresponding groove 154 and 146 receiving the sealing 160 for curing of the sealing 160 therein, as far as the sealing 160 permanently adheres to at least one of the front head 140 and the cover 150 to configure sufficient sealing connection between the front head 140 and the cover 150 while still allowing the cover 150 to be removed from the front head 140, without getting damaged to allow reuse thereof.

The sealing 160 defines the sealing connection between the front head 140 and the cover 150 to define an enclosure between the front head 140 and the cover 150. The enclosure so formed receives the electronic components such as the printed circuit board and the power transistors therein. More specifically, the cover 150 is adapted to cover the opening 143 of the front head 140, wherein the opening 143 is for receiving the printed circuit board inside the enclosure. Generally, micro gap are inherently created between the front end 144 and the abutment portion 152 due to the roughness of the abutting surfaces even when the cover is assembled on the front head 140.

To prevent leakage of moisture and dust particles through gap between peripheral wall 142 and the cover 150, the sealing 160 is deployed between the front end 144 and the abutment portion 152. More specifically, the sealing 160 prevents leakage of the moisture and dust particles inside the inverter housing 135. The sealing 160 is adapted to adhere to the surface on which the sealing 160 is deployed upon being cured. In accordance with a preferred embodiment, the sealing 160 is a cured in place gasket, of silicon rubber material that is in paste form and solidifies upon being cured. The sealing 160 should be capable of providing substantial sealing between the abutment portion 152 and the front end 144 in the assembled configuration of the cover 150 and the front head 140. Further, the sealing 160 should allow convenient dis-assembly of the cover 150 from the front head 140 to provide serviceability to the inverter 130 without getting damaged, thereby rendering the sealing 160 reusable for repetitive use.

After, the sealing 160 is cured on and adheres to the cover 150, the cover 150 and the front head 124 are assembled to each other using the mounting bolts 170. More specifically, the cover 150 is configured with through mounting holes 151 and the front end 144 is configured with blind mounting holes. The though mounting holes 151 on the cover 150 are aligned with respect to the blind mounting holes formed on the front end 144 to allow passage of the mounting bolts 170 there-through for mounting the cover 150 on the front head 140. As shown in FIG. 4-5, the mounting bolts are positioned radially outward of the sealing 160 to prevent leakage of moisture through the mounting holes 151.

To improve the sealing between the cover 150 and the front head 140 and prevent deterioration of the sealing effect of the sealing 160 because of corrosion, the cover 150 is formed with the rim portion 153 as illustrated in FIG. 4 and FIG. 5. The abutment portion 152 of the cover 150 rests on the front end 144 and the rim portion 153 extend from an outer end of the abutment portion 152 toward the axial direction of the front head 140 in the assembled configuration of the front head 140 and the cover 150. The rim portion 153 extends along an outer periphery of the peripheral wall 142 in the assembled configuration of the front head 140 and the cover 150. Such configuration of the rim portion 153 obstructs water or any corrosive liquid to penetrating into the abutting surfaces of the front head 140 and the cover 150. Accordingly, the sealing 160 is guarded from harmful corrosion rim portion 153 thereby enabling the repeated usage of the cover 150.

The height "hr" of the rim portion 153 is greater than the height "hp" of the protrusion of the sealing 160 from the abutment portion 152 when the cover is not assembled on the front head 140. Thanks to the rim 153 higher than the sealing 160, the sealing 160 is prevented from unwilling contact with other objects when the cover 150 with the cured sealing 160 is put thereon.

Generally, the rim portion 153 is radially spaced outwardly with respect to the sealing 160. The rim portion 153 extends along the outer periphery of the shoulder portion 145 with a gap there-between. More specifically, at least a portion of the rim portion 153 is adapted to overhang with respect to the front end 144 and urged towards the shoulder portion 145 as the cover 150 is mounted on the front head 140. The surface of the front end 144 interacting with the abutment portion 152 is machined to ensure tight fitting between the cover 150 and the front head 140 to prevent any moisture or dust from reaching the sealing 160. The rim portion 153 is adapted to overlap at least a portion of the shoulder portion 145. The rim portion 153 extends along the entire periphery of the cover 150. The present invention is not limited to any particular configuration of the rim portion 153 as long as the rim portion 153 is capable of prevents direct access to the gap the front end 144 and the abutment portion 152 by blocking the gap.

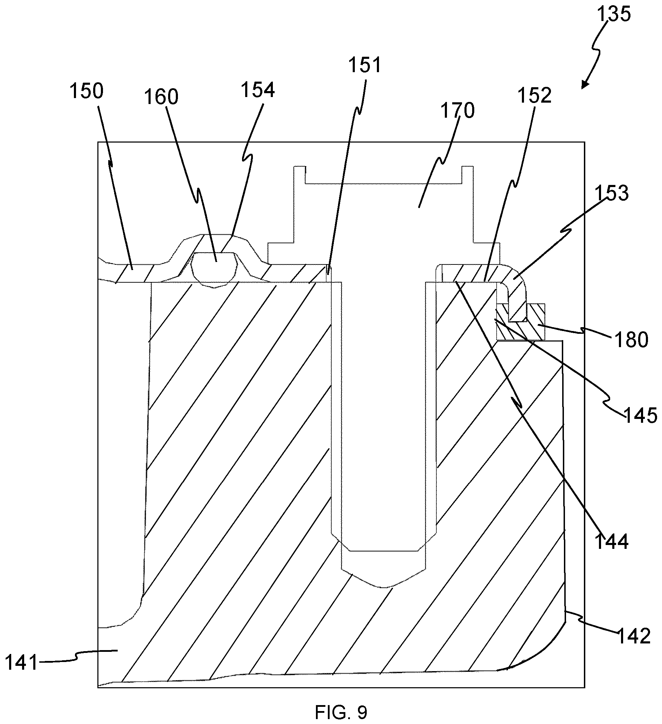

In accordance with another embodiment shown in FIG. 9, at least one supplement sealing 180 is disposed between the cover 150 and the shoulder portion 145. More specifically, the shoulder portion 145 is adapted to retain the supplemental sealing 180 between itself and the rim portion 153. The supplemental sealing 180 is adapted to further prevent direct access to the gap between the front end 144 and the abutment portion 152 by blocking the gap. The supplemental sealing 180 is disposed radially spaced outwardly with respect to the sealing 160, thereby restricts any moisture or dust from reaching the sealing 160 and escaping through the sealing-front head interface. The supplemental sealing 180 obstructs the gap to prevent any leakage through the gap and is urged against the shoulder portion 145 as the cover 150 is mounted over the front head 140 by means of the mounting bolts 170.

The sealing 160 and the supplemental sealing 180 configures sealing connection between the front head 140 and the cover 150 as depicted in the FIG. 9. The supplemental sealing 180 also extends along the circumference of the cover 150. The shoulder portion 145 is complementary to the supplemental sealing 180 to ensure proper sealing and positioning of the supplemental sealing 180 thereon. Further, the shoulder portion 145 is comparatively larger than supplemental sealing 180 to stably support the supplemental sealing 180 between the rim portion 153 and the shoulder portion 145. In accordance with another embodiment of the present invention, the supplemental sealing 180 is a cured in place gasket of silicon rubber material that is in paste form and solidifies upon being cured. The supplemental sealing 180 is U-shaped and adapted to receive the rim portion 153. In accordance with another embodiment, the rim portion 153 of the cover 150 comprises multiple legs, each leg portion adapted to be received a corresponding supplemental sealing 180 of the multiple supplemental sealing 180. However, the present invention is not limited to any particular configuration of the supplemental sealing 180 as far as the supplemental sealing 180 is capable of preventing direct access to the gap between the front end 144 and the abutment portion 152 by blocking the gap, thereby preventing moisture or dust from reaching the sealing 160 and escaping through the gasket-front head interface.

The sealing arrangement of the present invention includes at least one of the sealing 160 and at least one supplemental sealing 180 arranged in different combinations. In a preferred embodiment, the sealing arrangement includes the sealing 160 and at least supplemental sealing 180 disposed radially outward from the sealing 160. The sealing 160 and the supplemental sealing 180 can be arranged in any sequence, for ultimately preventing direct access to the gap between the front end 144 and the abutment portion 152. Such sealing arrangement comprising the rim portion 153 and the supplemental sealing 180 effectively restricts any moisture or dust from reaching the sealing 160 and escaping through the sealing-front head interface. The sealing 160 and the supplemental sealing 180 are compressed as the cover 150 is mounted on the front head 140 by means of the mounting bolts 170.

In any case, the invention cannot and should not be limited to the embodiments specifically described in this document, as other embodiments might exist. The invention shall spread to any equivalent means and any technically operating combination of means.

### Reference numeral list

100: electric machine
110: machine / a compressor unit
115: compressor housing
120: electric motor
125: motor housing
130: inverter
135: inverter housing
140: front head
141: bottom wall
142: peripheral wall
143: opening
144: a front end
145: shoulder portion
146: second groove
150: cover
151: mounting holes
152: abutment portion
153: rim portion
154: first groove
160: sealing
170: mounting bolts
180: supplemental sealing
200: sealing dispenser
300: Ultra violet radiator
d: depth of the groove
h: height of the cured sealing

## Claims

1. An electric machine (100) comprising:
• a machine (110);
• an electric motor (120) driving the machine (110);
• an inverter (130) received and held in an inverter housing (135) and adapted to process and regulate electrical power from an external power source before being supplied to the electric motor (120),
the inverter housing (135) comprising:
a front head (140) having a bottom wall (141) and a peripheral wall (142) extending from the outer end of the bottom wall (141) toward axial direction; and
a cover (150) provided on a front end (144) of the front head (140) to cover an opening (143) of the front head (140), wherein an abutment portion (152) of the cover (150) abuts on the front end (144) of the peripheral wall (142) of the front head (140),
**characterized in that** a sealing (160) is provided between the front end (144) of the peripheral wall (142) and the abutment portion (152) of the cover (150), wherein the sealing (160) adheres with one of the front end (144) and the abutment portion (152) while not with the other.

2. The electric machine (100) as claimed in the previous claim, wherein one of the abutment portion (152) of the cover (150) and the front end (144) of the peripheral wall (142) is formed with a groove (154, 146) to receive and retain the sealing (160) to be cured therein before assembly of the cover (150) to the front head (140).

3. The electric machine (100) as claimed in the previous claim, wherein the sealing (150) extends beyond an abutting surface of the corresponding cover (150) or the front end (144) of the front head (140) upon being cured and is compressed between the cover (150) and the front head (140) when the cover (150) is assembled on the front head (140).

4. The electric machine (100) as claimed in the claim 2, wherein vertical dimension "h" of the sealing (160) is greater than depth 'd" of the groove (154, 146).

5. The electric machine (100) as claimed in the claim 3, wherein the cross sectional area of the groove (154, 146) is greater than the cross-sectional area of the sealing (160).

6. The electric machine (100) as claimed in any of the preceding claims, wherein the cover (150) comprises a rim portion (153) extending from an outer end of the abutment portion (152) toward the axial direction of the front head (140).

7. The electric machine (100) as claimed in claim, wherein the abutment portion (152) of the cover (150) overhangs the front end (144) of the peripheral wall (142), and the rim portion (153) extends along an outer periphery of the peripheral wall (142).

8. The electric machine (100) as claimed in claim 7, wherein a shoulder portion (145) is formed on the outer periphery of the peripheral wall (142), the rim portion (153) extends along an outer periphery of the shoulder portion (145) with a gap there-between.

9. The electric machine (100) as claimed in the previous claim further comprises a supplemental sealing (180) disposed between the rim portion (153) of the cover (150) and the shoulder portion (145) of the front head (140).

10. The electric machine (100) as claimed in any of the preceding claims, wherein the cover (150) is formed by a stamping process from a metallic plate.
